# EUROPEAN PATENT SPECIFICATION

(11) **EP 3 725 716 B1**
(45) Date of publication and mention of the grant of the patent: **07.06.2023**
(21) Application number: 17842321.6
(22) Date of filing: 11.12.2017
(51) Int. Cl.: B65H 29/06, G01N 21/84, G01N 21/95, B31B 70/92, G01N 21/89, B31B 70/00, G01N 21/86, B65H 31/24, B65H 29/62, B65H 29/58, B65H 29/12, G07C 3/14

(54) **SYSTEM FOR CHECKING BAGS AND VISUAL BAG INSPECTION MACHINE**
SYSTEM ZUM PRÜFEN VON BEUTELN UND MASCHINE ZUR VISUELLEN PRÜFUNG VON BEUTELN
SYSTÈME POUR LA VÉRIFICATION DE SACS ET MACHINE D'INSPECTION VISUELLE DE SACS

(43) Date of publication of application: 21.10.2020
(73) Proprietor: Lapeyra Y Taltavull Comercial, S.L., 08025 Barcelona (ES)
(72) Inventor: FORNOS JOVÉ, Alejandro, 08025 Barcelona (ES)
(74) Representative: Manresa Medina, José Manuel
(86) International application number: PCT/ES2017/070806
(87) International publication number: WO 2019/115840

(56) References cited:
- EP-A1- 2 433 872
- EP-A2- 0 571 728
- WO-A1-2016/166452
- DE-C1- 4 417 121
- JP-A- 2006 273 548

## Description

### BACKGROUND OF THE INVENTION

Various machines and systems for controlling bag manufacturing quality are known in the state of the art, see e.g. DE 44 17 121 C1 and EP 0 571 728 A2. So, Spanish Patent No. 200901048 (ES2347513) "DISPOSITIVO DISPENSADOR DE BOLSAS, MÁQUINA DISPENSADORA DE BOLSAS PROVISTA DE DICHO DISPOSITIVO Y PROCEDIMIENTO AUTOMATIZADO DE EMBALAJE DE BOLSAS", from the year 2009, in the name of MACFER ENGINEERING, S.L., that relates to a bag dispensing device, especially for bags that have a previously lined base part that is superimposed in a lateral wall of the bag, enabling the bag supply and control process to be automated by means of the arrangement of a sorting element provided with a pair of rotating elements such that it selects, using control means, with artificial vision, the dimensionally correct bags from the bags that have some type of shape defect. Said document also relates to a bag dispensing machine provided with a dispensing device of the above-mentioned type.

Patent WO2016/166452 "METHOD AND MACHINE FOR SORTING BAGS", from the year 2016, in the name of HOLWEG GROUP, also belongs to the state of the art, and it refers to a method for sorting bags: - bags are provided, filing past flat one after the other while being separated by a gap; - the exterior edges of each bag are checked to determine whether the template and the position of the bag correspond to a calibrated bag or non-calibrated bag, - the non-calibrated bags are ejected, - the calibrated bags are presented in front of a visual inspection system to determine an acceptable or unacceptable quality of the inspected bag; and - the acceptable bags are stacked and the unacceptable bags are rejected after they have passed in front of the visual inspection system. Said document also relates to a machine implementing the method.

Patent WO2010/133597 "DEVICE FOR DETECTING SHAPE FLAWS OF TUBULAR BAG BODIES", from the year 2010, in the name of STARLINGER & CO GESELLSCHAFT M.B.H., the invention relates to a device for detecting shape flaws of tubular bag bodies, in particular of bag bodies folded to form rectangular-cuboid-shaped bags, while the bag bodies are transported along a conveying path on a conveying apparatus, comprising at least one contour sensor for detecting the contour of a bag body and a comparison apparatus for comparing the detected contour of the bag body with a desired contour, wherein the comparison apparatus sends out a shape flaw signal if the deviation between the detected contour of the bag body and the desired contour exceeds a predefined threshold. The comparison apparatus compares the detected contour of the bag body to an envelope curve representing the desired contour. Said document further relates to a device for producing bags from tubular bag bodies, comprising a shape flaw detection device.

### BRIEF DESCRIPTION OF THE INVENTION

This application refers to the machines that control bag manufacturing.

The closest prior art is the patent WO2016166452.

Said patent raises the problem of how to solve the jamming problems of those bags that cannot pass through the visual inspection system.

For this purpose a system is used to control the outer edges of the bags, so that it determines whether or not the measurements are observed.

The problem exists because that system is not completely reliable and allows poorly made bags to pass which end up jamming the machine. Also, it is a more complex machine because, first some sensors take some measurements, and then the visual inspection system is fully working, configured by at least two visual inspection means or cameras, to check the type of the bags.

The inventors have solved various problems of the closest prior art with this invention. Thus, they eliminate the outer edge controls, because they cannot determine whether for example a bag is badly configured or if it is turned, but is still valid.

For this purpose, they propose a system wherein the visual inspection means capture an image of the base of the bag, and if said base coincides with a predetermined template, the machine accepts it.

Also, it is not important if a bag measures a few millimeters more on its edges because the bags are not precision products, whose bag would be discarded according to the closest prior art but is accepted in this application if the bag is well manufactured.

Therefore, it is not necessary that the bag is well aligned when it enters in the machine, it could be twisted, and if the bag is manufactured correctly, if it is within the predetermined template, it will be accepted, due to the fact that the visual inspection means determine whether the bag is well manufactured and not if its position is correctly, because the position with a certain degree of deviation is not important.

Also, the visual inspection system represents a saving. In the background, it can be seen that there are at least two visual inspection means or cameras, arranged consecutively, which take a picture of the bag at the same time, in order to determine whether it is well manufactured, with the consequent duplicated maintenance expense.

Therefore, the inventors have at least two visual inspection means or cameras, independents to each other, wherein the first has to recognize a bag template and if the bag, when the picture is taken, coincides with the template, the bag is taken as valid, but if otherwise it does not coincide with the template, the bag is discarded.

The second visual inspection means or camera is used for the handle, therefore, when there is a bag without handles, it is not used either even if the bag is valid. But also, this second visual inspection means or camera only starts working if the bag is accepted by the first visual inspection means or camera; in other words, if said first visual inspection means reject the bag because it has not been manufactured correctly, the second means do not come into action, which is something that does not occur in the closest prior art.

Also, it is possible to change the bag template without having to make significant changes to the machine, without altering the machine, with this system. In other words, the shape of the bag could be changed without having to substantially vary the machine, just with a few adjustments, and this cannot be done in the closest prior art.

An object of this invention is a system for checking bags according to the appended claim 1.

An additional object of this invention is a visual bag inspection machine according to the appended claim 5.

A second additional object of this invention is said machine further comprising a rotary drum, activated by driving means and retention means for bags according to the appended claim 12.

### BRIEF DESCRIPTION OF THE DRAWINGS

Three sheets of drawings are attached to the specification, representing a practical embodiment, which is provided as a non-limiting example of the scope of this invention:
- Figure 1 is a view of the general working of the safety system that is the object of this invention.
- Figure 2 is a detail of the working of the invention when a bag is delayed, and
- Figure 3 is a detail of the transfer of the bag from the drum to the first bag transport means.

### SPECIFIC EMBODIMENT OF THIS INVENTION

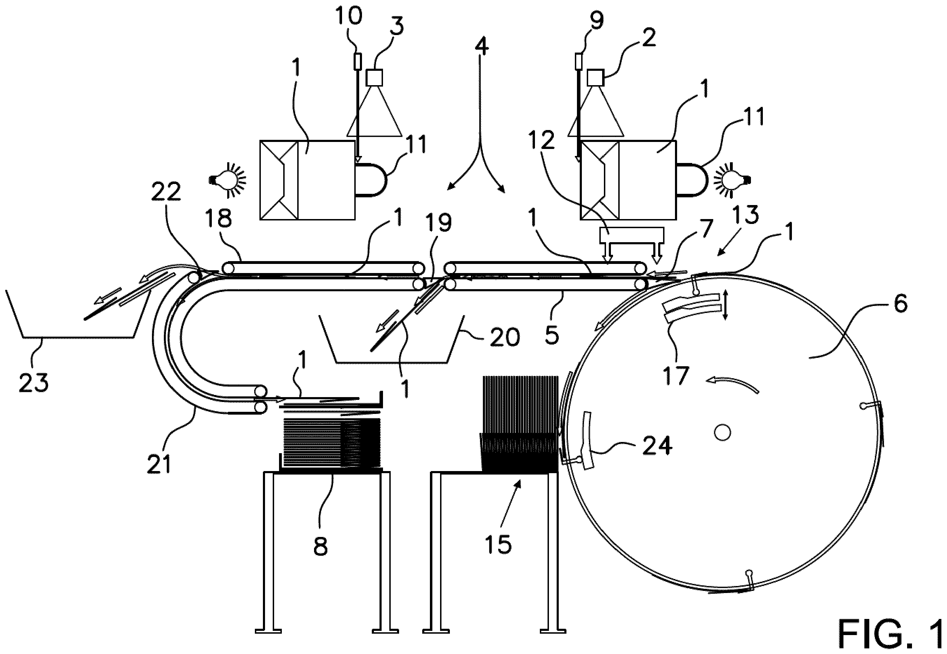

Figure 1 describes a bag 1, a handle 11, first visual inspection means 2, second visual inspection means 3, conveyor means 4, first passage control means 9, second passage control means 10, first tape belts 5, second tape belts 18, retention means 13, a drum 6, a first discriminator 7, a second discriminator 19, a third discriminator 22, a first container 20, a second container 23, a third container 15, overturning means 21, packaging means 8, a first cam 17, a second cam 24 and passage means 12.

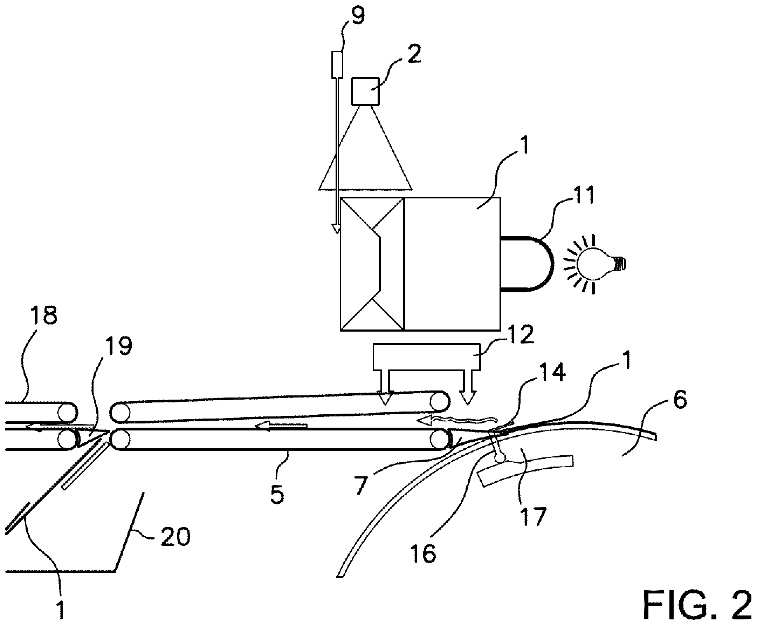

Figure 2 represents the bag 1, the handle 11, first visual inspection means 2, passage control means 9, first tape belts 5, second tape belts 18, the drum 6, the first discriminator 7, the second discriminator 19, the first container 20, passage means 12, an external clamp 14, an inner protrusion 16 and a cam 17.

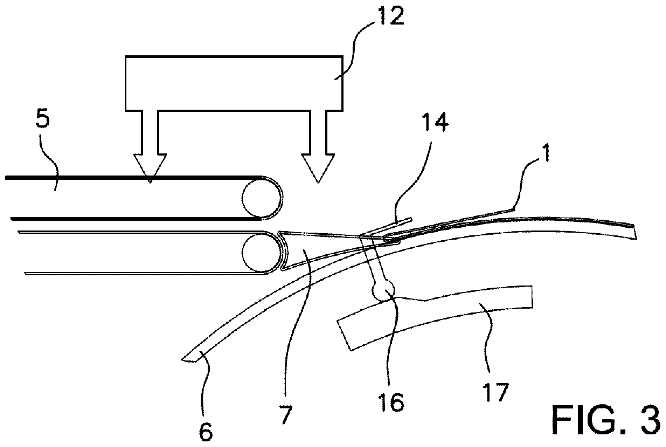

Finally, Figure 3 shows bag 1, first tape belts 5, the drum 6, the first discriminator 7, passage means 12, the external clamp 14, the inner protrusion 16 and the first cam 17.

So, in a specific embodiment, the system for checking bags, comprises two stages.

In a first stage some supply means (for example the drum 6), supply bags 1 for checking their quality.

It also comprises a second stage wherein some first visual inspection means or cameras 2 check whether the bag 1 that is the object of examination, is within some previously pre-established parameters, which can range from shape, colour, etc.

If the bag 1 fulfils the parameters of said template the bag is accepted and if it does not fulfil them it is rejected.

It also comprises a third stage wherein some packaging means 8 package those bags 1 finally accepted.

Between the first and second stage there is an intermediate stage wherein the bags 1 pass through conveyor means 4, which comprises first tape belts 5 opposite one to another and separated a predetermined distance, where the bags 1 for analysing are located.

The first tape belts 5 comprise some passage means 12, a first and a second, which calculate the time bag 1 takes to pass between the first passage means and the second, increasing the distance between the first tape belts 5 when passage means 12 detects that the passage time between the first passage means and the second is greater than the predetermined time.

This means that the first passage means 12, by understanding that the passage time of bag 1 is greater than the predetermined time, understands that there is a delay, and to avoid a definitive jam, it increases the distance between the tape belts 5 to avoid the jam and so that the bag 1 can pass.

Therefore, the first tape belts 5 adapt their distance when the machine understands that bag 1 may be jammed, letting it pass nevertheless.

Before the conveyor means 4, there is a rotary drum 6, which supplies bags 1 to the conveyor means 4 and which comprises a first discriminator 7 for rejecting bags 1, either for manual or automatic selection.

Also, optionally, between the second and the third stage there is a second intermediate stage wherein the second visual inspection means or cameras 3 check the handle 11 of the bag, accepting the bag 1 if it fulfils the parameters, sending it to the third stage, and rejecting it if it does not fulfil the parameters. This stage is not used if the bag is one of the bags without handles 11.

Optionally, it is envisaged that the bags 1 accepted from the third stage, before being stacked, are overturned, as this prevents the bottom of the bag that is folded to be stocked with the one immediately following.

The visual bag inspection machine comprises some first visual inspection means or cameras 2 and some second visual inspection means or cameras 3 that check bags 1.

It also has first means for conveying the bags 4 to the first visual inspection means or cameras 2.

The first visual inspection means or cameras 2 act on each bag 1 analysing a template with a predetermined shape, accepting or rejecting bags 1.

Also, the second visual inspection means or cameras 3 analyse the bags accepted by the first visual inspection means or cameras 2, being said bags on the second means for conveying 18 the bags, and the first visual inspection means or cameras 2 acting independently from second visual inspection means or cameras 3.

They are independent because if the first visual inspection means or cameras 2 reject one bag 1, the second visual inspection means or cameras 3 do not activate because they are not necessary, and this characteristic is not included in the background of the invention, which all require the activation of all the visual inspection means whether bag 1 is accepted or not.

They are also independent because if the bag 1 does not have handles 11, the second visual inspection means 3 are not activated because they only control the handles 11.

Optionally, it comprises overturning means 21 for the bags 1 accepted by the second visual inspection means or cameras 3, which turn the accepted bags 1. As indicated above, this is done to prevent that bags 1 do not stuck on the immediately following bag. As the bottom of the bags 1 is folded, if they were arranged upwards they could stuck on the fold of the following bag 1, this way, as the face of the lower bag on which bag 1 falls is flat, there is no possibility that it stucks or fits on the fold.

So, it is possible to set up the machine so that there are the first tape belts 5, two in this embodiment, one upper, one lower, although due to construction requirements the number could vary, being faced and separated to each other a predetermined distance, where the bags 1 for analysing are placed.

The first tape belts 5 comprise passage means 12, a first and a second, which calculate the time that a bag 1 takes to pass between the first passage means and the second passage means, increasing the distance between the first tape belts 5 when the passage means 12 detect that the passage time between the first passage means and the second is greater than the predetermined time.

In this way if the machine detects that bag 1 exceeds the predetermined time, in other words, that it could be jammed, the machine lets it pass to first the visual inspection means 2 that check whether the bag 1 is well manufactured and the machine does not stop.

It is important to highlight that if a machine jams because of a bag 1, stopping the machine and restarting it so that it works regularly implies a time period of approximately 30 minutes, with the consequent economic loss.

In other words, when passage means 12 detect a jam, the first thing they do is to increase the distance between the first tape belts 5 to allow the bag 1 to pass in order to be analysed by the first visual inspection means 2.

Next, the first passage means 9 detect the bottom of the bag 1, and activate the first visual inspection means so that they check if it coincides with the predetermined template or not, considering those that coincide with the template as valid and discarding those that do not coincide.

Optionally, some second tape belts 18 can be envisaged, at least two (as with the first tape belts 5), faced to each other and separated a predetermined distance, where the bags 1 accepted from first tape belts 5 are located.

Optionally, a second discriminator 19 can also be set up, between the first tape belts 5 and the second tape belts 18, which diverts the bags 1 that come out of the first tape belts 5 either towards second tape belts 18 or a first container 20. In other words, this second discriminator 19 separates the bags 1 that have been marked as observing the template, so that they go to the second tape belts 18, from the bags 1 which have been marked as not observing the template and which go to the first container 20.

The second visual inspection means 3 are located on the second tape belts 18, so that they are only activated for the bags 1 accepted by the first visual inspection means 2.

Also, optionally it comprises passage control means, a first 9 and a second 10, for the bags 1 on the second tape belts 18, which when detecting the bags send instructions to second visual inspection means 3 so that at that moment or later they takes an image of the handle 11 of the bag and check if the image coincides with the pre-established templates.

The machine could be set up to provide a third discriminator 22 which sends accepted bags 1 to be packaged, in other words, those bags that have a handle 11 according to the pre-established templates, and sends the rejected bags 1 to a second container 23.

The bag conveyor machine in this invention is the one that would be placed before the visual inspection machine.

This machine comprises a rotary drum 6, activated by some driving means (not shown). It also comprises retention means 13 for bags 1 and the first discriminator 7, automatic or manual, which diverts bags 1 to a third container 15 or vessel or to the next machine.

This first discriminator 7 is to be used at the beginning, for the first manufactured bags, while adjustments are made to the bag manufacturing machine to change the format of bag 1, because the initial bags are usually deficient, and this way they can already be considered poor examples and be rejected without having to let them enter to the visual inspection machine.

It can be manual or automatic, in other words, it can be an engine, pneumatic cylinder or other driving means which, upon instructions from the operator or a program, moves the first discriminator 7.

The first discriminator 7, like a door, swings defining an entry for the bags either towards third container 15 or towards the next machine.

The retention means 13 comprise an external clamp 14 that fixes the bag 1 which is integral to an inner protrusion 16, whereby when said inner protrusion 16 hits a cam 17, arranged radially and outside the drum 6, said cam 17 raises the inner protrusion 16, by acting on the external clamp 14 which releases the bag 1.

The machine comprises at least two cams, a first one 17 and a second one 24, that, according to the working position of the first discriminator 7 the retention means 13 release the bag 1 on the first cam 17 following the bag 1 to the next machine or releasing the bag on the second cam 24 towards the third container 15.

Therefore, the system, combining the two machines, would work as follows.

A machine that manufactures bags 1 (not shown) supplies said bags to the bag conveyor machine. Drum 6 turns on its axis. The bags are held by the external clamps 13, arranged on the surface of said drum 6.

Either because an operator determines it or because the software governing the machine gives instructions, the first discriminator 7 makes a swinging movement, allowing either the external clamps 13 to pass with the bags to the third container 15 or for passing on to the visual inspection machine.

The drum 6 has at least two cams, a first 17 which releases the bag 1 when the first discriminator 7 is in position to access the visual inspection machine and a second cam 24 that releases the bag 1 when the first discriminator 7 is in position to access to the third container 15 and the bag 1 is ready to be placed in the third container 15.

At the start of production there are a number of bags 1 that are directly considered rejectable, and therefore they will go directly to the third container 15, avoiding the above-mentioned problem of stopping the visual inspection machine because of jams.

Retention means 13 on drum 6 comprise external clamps 14 that fix the bags 1. Said external clamps 14, as indicated previously, are integral to the inner protrusion 16. So, when the software or the operator so instruct, the first 17 or second cam 24, depending on whether they should go to the visual inspection machine or the third container 15, will move towards the perimeter of drum 6, so that the inner protrusion 16 hits the corresponding cam 17,24, raising the cam 17,24 to the inner protrusion 16, by acting on the external clamp 14 which releases the bag 1.

Then, those bags that are going to the visual inspection machine, particularly at the first tape belts 5 that will take bag 1 to the first visual inspection means 2 so that they take an image of it.

Beforehand, if the passage means 12 detect that bag 1 has not passed in what is considered the predetermined time, it will separate the tape belts 5 to let the bag 1 pass, as this would mean that there may be a jam.

Next, the first passage control means 9, for example a sensor, detect the passage of bag 1 and send said information to the first visual inspection means 2, for example a camera, so that it takes an image of the bottom of bag 1.

Said image is compared and if it coincides with some parameters it is accepted.

The advantage over the closest prior art is that bag 1 does not need to have exact measurements, it does not have to be an exact product, because due to the folds and the gluing it may have an approximate size, but if it is well made, the machine will consider it to be valid.

Also, if the bag 1 enters twisted, camera 2 will still take the picture and if the bag 1 is well made it will be considered as valid, something which also makes it different from the closest prior art.

Then, depending on whether camera 2 has shown the bag 1 to be valid or not, the second discriminator 19 will be arranged in the discriminating position. If the bag is not accepted it will send the bag 1 to the first container 20 and if the bag 1 is accepted it will direct it towards the second tape belts 18.

If the bag 1 continues along the second tape belts 18, the second control means 10, for example, some sensors, will detect the passage of the bag 1 and they will send a signal to the second visual inspection means 3, a camera, for example, so that it takes an image of the handle 11. If the image taken by camera 3 is in accordance to the parameters of the bag 1 it will be considered valid and if not, it will be rejected.

In the event that the bag 1 had handles 11 and it was rejected thanks to the image taken by the first camera 2, the second camera 3 would not be used, it would not be activated, and that does not happen in the closest prior art which always takes an image. This means an increase in the durability of the material and a subsequent economic saving, for those series of bags 1 with handles 11 that are rejected by the first camera 2, where this part of the machine (that corresponds to the second camera 3) would not start working.

The third discriminator 22 separates the bags given as valid which go to packaging means 8 from those bags which go to the second container 23.

Those bags that go to the packaging means 8 are overturned beforehand by the overturning means 21, as this way when stacked with the flat face upwards it will prevent them from being stuck by the folds of the base or bottom of the bag

In order to drag the bags 1, both the first 5 and second tape belts 18 could include an elastic cord system. It has the advantage that it does not need tensing elements and also, cords take up less space when the respective cameras 2,3 take the image of bag 1.

This invention describes a new system for checking bags and a visual inspection machine. The examples mentioned here are non-limiting to this invention, and therefore it can have different applications and/or adaptations, all within the scope of the following claims.

## Claims

1. - A system for checking bags, of the type comprising:
- a first stage wherein some supply means supply some bags (1) to be checked,
**characterized in that** it comprises
- a second stage wherein the first visual inspection means or cameras (2) check according to a pre-established template if the bottom of the bag (1) is within pre-established parameters of said template, accepting it if it observes them and sending it to the third stage or rejecting it if it does not observe them, and
- a third stage wherein some packaging means (8) package those accepted bags (1)
such that between the first and second stage there is an intermediate stage wherein the bags (1) pass through conveyor means (4), which comprise first tape belts (5) faced to each other and separated a predetermined distance, where the bags (1) to be analysed are placed, comprising in the first tape belts (5) some passage means (12), a first and a second, which calculate the time a bag (1) takes to pass between the first passage means and the second, increasing the distance between the first tape belts (5) when the passage means (12) detect that the time between the first passage means and the second is greater than the predetermined time.

2. A system, according to claim 1, **characterized in that** before the conveyor means (4) there is a drum (6) that supplies the bags (1) to the conveyor means (4) and which comprises a first discriminator (7) for rejecting bags (1), either manually or automatically.

3. A system, according to claim 1, **characterized in that** between the second and third stage there is a second intermediate stage wherein the second visual inspection means or cameras (3) check the handle (11) of the bag, accepting the bag (1) if it observes the parameters, sending it to the third stage, and rejecting it if it does not observe them.

4. A system, according to claim 1, **characterized in that** before packaging the bags (1) accepted from the third stage, said bags (1) are overturned before being stacked.

5. A visual bag inspection machine, of the type comprising first visual inspection means or cameras (2) and second visual inspection means or cameras (3) that check bags (1), conveyor means (4) for conveying bags (1) to the first visual inspection means or cameras (2) **characterized in that**:
- the first visual inspection means or cameras (2) act on each bag (1) analysing a template with a predetermined shape, accepting or rejecting bags (1) and
- the second visual inspection means or cameras (3) analyse the bags accepted by the first visual inspection means or cameras (2), with said bags being on the second bag conveying means (18),
acting the first visual inspection means or cameras (2) independently from the second visual inspection means or cameras (3), and further said conveyor means (4) comprising the first tape belts (5), at least two, faced to each other and separated a predetermined distance, where the bags (1) to be analysed are placed, and such that in the first tape belts (5) there are passage means (12), a first and a second, which calculate the time that a bag (1) takes to pass between the first passage means and the second, increasing the distance in between the first tape belts (5) when the passage means (12) detects that the time for passing between the first passage means and the second is greater than the predetermined time.

6. A machine, according to claim 5, **characterized in that** it comprises bags overturning means (21) for the bags (1) that are accepted by the second visual inspection means or cameras (3).

7. A machine, according to claim 5, **characterized in that** it comprises second tape belts (18), at least two, faced to each other and separated a predetermined distance, where the bags (1) accepted by the first tape belts (5) are placed.

8. A machine, according to claim 7, **characterized in that** between the first tape belts (5) and the second tape belts (18) there is comprised a second discriminator (19) which diverts the bags (1) that come out of the first tape belts (5) either to the second tape belts (18) or to a first container (20).

9. A machine, according to claim 7, **characterized in that** the second visual inspection means (3) are located over the second tape belts (18).

10. A machine, according to claim 9, **characterized in that** it comprises second passage control means (10) for the bags (1) on the second tape belts (18), which when they detect the bag send instructions to the second visual inspection means (3) so that at that moment or later it takes an image of the handle (11) of the bag.

11. A machine, according to claim 10, **characterized in that** it comprises a third discriminator (22) that sends the accepted bags (1) for packaging and sends the rejected bags (1) to a second container (23).

12. A machine according to claim 11, **characterized in that** it further comprises a rotary drum (6), activated by driving means and retention means (13) for bags (1), and a first discriminator (7), automatic or manual, which diverts the bags (1) either towards a third container (15) or to the first tape belts (5).

13. A machine, according to claim 12, **characterized in that** the first discriminator (7), like a door, swings defining an entry for the bags either towards said third container (15) or to the first tape belts (5).

14. A machine, according to claim 13, **characterized in that** the rotary drum (6) further comprises at least two cams, a first (17) and a second (24), where depending on the working position of the first discriminator (7) the retention means (13) release the bag (1) on the first cam (17) following the bag (1) to the first tape belts (5) or releasing the bag on the second cam (24) towards the third container (15).

## Patentansprüche

1. System zum Prüfen von Taschen von dem Typ, der das Folgende aufweist:
- einen ersten Bereich, in dem Zuführungseinrichtungen zu prüfende Taschen (1) zuführen,
**dadurch gekennzeichnet, dass** das System das Folgende aufweist:
- einen zweiten Bereich, in dem die ersten Einrichtungen zur visuellen Inspektion oder Kameras (2) gemäß einer vorab festgelegten Vorlage prüfen, ob der Boden der Tasche (1) innerhalb vorab festgelegter Parameter der Vorlage liegt, wobei sie sie akzeptieren, wenn er sie einhält, und sie zum dritten Bereich befördern oder sie ablehnen, wenn er sie nicht einhält, und
- einen dritten Bereich, in dem Verpackungseinrichtungen (8) diese akzeptierten Taschen (1) verpacken,
so dass sich zwischen dem ersten Bereich und dem zweiten Bereich ein Zwischenbereich befindet, in dem die Taschen (1) Fördereinrichtungen (4) durchlaufen, die erste Bänder (5) aufweisen, die einander gegenüberliegen und durch einen vorbestimmten Abstand separiert sind, wo die zu analysierenden Taschen (1) platziert werden, und die in den ersten Bändern (5) Durchgangseinrichtungen (12) aufweisen, eine erste und eine zweite Durchgangseinrichtung, welche die Zeit berechnen, die eine Tasche (1) benötigt, um zwischen der ersten Durchgangseinrichtung und der zweiten durchzulaufen, und die den Abstand zwischen den ersten Bändern (5) vergrößern, wenn die Durchgangseinrichtungen (12) detektieren, dass die Zeit zwischen der ersten Durchgangseinrichtung und der zweiten größer ist als die vorgegebene Zeit.

2. System nach Anspruch 1, **dadurch gekennzeichnet, dass** vor den Fördereinrichtungen (4) eine Trommel (6) angeordnet ist, welche die Taschen (1) den Fördereinrichtungen (4) zuführt und die einen ersten Diskriminator (7) entweder zum manuellen oder automatischen Ablehnen von Taschen (1) aufweist.

3. System nach Anspruch 1, **dadurch gekennzeichnet, dass** zwischen dem zweiten und dritten Bereich ein zweiter Zwischenbereich angeordnet ist, in dem die zweiten Einrichtungen zur visuellen Inspektion oder Kameras (3) den Griff (11) der Tasche prüfen, wobei sie die Tasche (1) akzeptieren, wenn er die Parameter einhält, in den dritten Bereich befördern, und sie ablehnen, wenn er sie nicht einhält.

4. System nach Anspruch 1, **dadurch gekennzeichnet, dass** vor dem Verpacken die Taschen (1), die von dem dritten Bereich akzeptiert worden sind, umgedreht werden, bevor sie gestapelt werden.

5. Maschine zur visuellen Inspektion von Taschen von dem Typ, der das Folgende aufweist erste Einrichtungen zur visuellen Inspektion oder Kameras (2) und zweite Einrichtungen zur visuellen Inspektion oder Kameras (3), die Taschen (1) prüfen; und Fördereinrichtungen (4) zum Fördern der Taschen (1) zu den ersten Einrichtungen zur visuellen Inspektion oder Kameras (2), **dadurch gekennzeichnet, dass**:
- die ersten Einrichtungen zur visuellen Inspektion oder Kameras (2) bei jeder Tasche (1) tätig sind, wobei sie eine Vorlage mit einer vorbestimmten Form analysieren und die Taschen (1) akzeptieren oder ablehnen, und
- die zweiten Einrichtungen zur visuellen Inspektion oder Kameras (3) die Taschen analysieren, die von den ersten Einrichtungen zur visuellen Inspektion oder Kameras (2) akzeptiert worden sind, wobei sich diese Taschen auf den zweiten Taschenfördereinrichtungen (18) befinden,
die ersten Einrichtungen zur visuellen Inspektion oder Kameras (2) unabhängig von den zweiten Einrichtungen zur visuellen Inspektion oder Kameras (3) tätig sind, und ferner die Fördereinrichtungen (4) die ersten Bänder (5) aufweisen, zumindest zwei, die einander gegenüberliegen und durch einen vorbestimmten Abstand separiert sind, wo die zu analysierenden Taschen (1) platziert werden, und so dass in den ersten Bändern (5) Durchgangseinrichtungen (12) vorhanden sind, eine erste und eine zweite Durchgangseinrichtung, welche die Zeit berechnen, die eine Tasche (1) benötigt, um zwischen dem ersten Durchgangseinrichtungen und dem zweiten durchzulaufen, und den Abstand zwischen den ersten Bändern (5) vergrößern, wenn die Durchgangseinrichtungen (12) detektieren, dass die Zeit zum Durchlaufen zwischen der ersten Durchgangseinrichtung und der zweiten größer ist als die vorgegebene Zeit.

6. Maschine nach Anspruch 5, **dadurch gekennzeichnet, dass** sie Taschen-Umdreheinrichtungen (21) für die Taschen (1) aufweist, die von den zweiten Einrichtungen zur visuellen Inspektion oder Kameras (3) akzeptiert worden sind.

7. Maschine nach Anspruch 5, **dadurch gekennzeichnet, dass** sie zweite Bänder (18) aufweist, mindestens zwei, die einander gegenüberliegen und in einem vorbestimmten Abstand separiert sind, wo die Taschen (1) platziert werden, die von den ersten Bändern (5) akzeptiert worden sind.

8. Maschine nach Anspruch 7, **dadurch gekennzeichnet, dass** zwischen den ersten Bändern (5) und den zweiten Bändern (18) ein zweiter Diskriminator (19) angeordnet ist, der die Taschen (1), die von den ersten Bändern (5) kommen, entweder zu den zweiten Bändern (18) oder zu einem ersten Behälter (20) ablenkt.

9. Maschine nach Anspruch 7, **dadurch gekennzeichnet, dass** die zweiten Einrichtungen zur visuellen Inspektion (3) über den zweiten Bändern (18) angeordnet sind.

10. Maschine nach Anspruch 9, **dadurch gekennzeichnet, dass** sie zweite Durchgangssteuerungseinrichtungen (10) für die Taschen (1) auf den zweiten Bändern (18) aufweist, die, wenn sie die Tasche detektieren, Instruktionen an die zweiten Einrichtungen zur visuellen Inspektion (3) senden, sodass diese zu diesem Zeitpunkt oder später ein Bild von dem Griff (11) der Tasche aufnehmen.

11. Maschine nach Anspruch 10, **dadurch gekennzeichnet, dass** sie einen dritten Diskriminator (22) aufweist, der die akzeptierten Taschen (1) zum Verpacken schickt und die abgelehnten Taschen (1) zu einem zweiten Behälter (23) schickt.

12. Maschine nach Anspruch 11, **dadurch gekennzeichnet, dass** sie ferner das Folgende aufweist eine Rotationstrommel (6), die durch Antriebseinrichtungen aktiviert wird; Halteeinrichtungen (13) für Taschen (1); und einen automatischen oder manuellen ersten Diskriminator (7), der die Taschen (1) entweder zu einem dritten Behälter (15) oder zu den ersten Bändern (5) ablenkt.

13. Maschine nach Anspruch 12, **dadurch gekennzeichnet, dass** der erste Diskriminator (7), wie eine Tür, schwingt und einen Eingang für die Taschen entweder zum dritten Behälter (15) oder zu den ersten Bändern (5) bildet.

14. Maschine nach Anspruch 13, **dadurch gekennzeichnet, dass** die Rotationstrommel (6) ferner mindestens zwei Nocken aufweist, einen ersten Nocken (17) und einen zweiten Nocken (24), wobei, abhängig von der Arbeitsposition des ersten Diskriminators (7), die Halteeinrichtungen (13) die Tasche (1) auf dem ersten Nocken (17), welcher der Tasche (1) folgt, zu den ersten Bändern (5) abgeben, oder die Tasche auf dem zweiten Nocken (24) zum dritten Behälter (15) hin abgeben.

## Revendications

1. Système de vérification de sacs, du type comprenant :
- une première phase dans laquelle un certain nombre de moyens d'apport apportent un certain nombre de sacs (1) à vérifier,
**caractérisé en ce qu'**il comprend
- une deuxième phase dans laquelle les premiers moyens d'inspection visuelle ou les caméras (2) vérifient, en fonction d'un gabarit préétabli, si le fond du sac (1) correspond à des paramètres préétablis dudit gabarit, l'acceptant s'il les satisfait et l'envoyant à la troisième phase ou le rejetant s'il ne les satisfait pas, et
- une troisième phase dans laquelle un certain nombre de moyens d'emballage (8) emballent ces sacs acceptés (1)
de sorte qu'entre les première et deuxième phases se trouve une phase intermédiaire dans laquelle les sacs (1) passent à travers des moyens de transport (4), qui comprennent des premières bandes roulantes (5) en regard l'une de l'autre et séparées d'une distance prédéterminée, où les sacs (1) à analyser sont placés, comprenant dans les premières bandes roulantes (5) un certain nombre de moyens de passage (12), un premier et un second, qui calculent le temps que prend un sac (1) pour passer entre le premier moyen de passage et le second, augmentant la distance entre les premières bandes roulantes (5) lorsque les moyens de passage (12) détectent que le temps entre le premier moyen de passage et le second est supérieur au temps prédéterminé.

2. Système, selon la revendication 1, **caractérisé en ce que**, avant les moyens de transport (4) se trouve un tambour (6) qui apporte les sacs (1) aux moyens de transport (4) et qui comprend un premier discriminateur (7) destiné à rejeter des sacs (1), soit manuellement, soit automatiquement.

3. Système, selon la revendication 1, **caractérisé en ce que**, entre les deuxième et troisième phases se trouve une deuxième phase intermédiaire dans laquelle les seconds moyens d'inspection visuelle ou les caméras (3) vérifient la anse (11) du sac, acceptant le sac (1) s'il satisfait aux paramètres, l'envoyant à la troisième phase, et le rejetant s'il ne les satisfait pas.

4. Système, selon la revendication 1, **caractérisé en ce que**, avant l'emballage des sacs (1) acceptés de la troisième phase, lesdits sacs (1) sont retournés avant d'être empilés.

5. Machine d'inspection visuelle de sacs, du type comprenant des premiers moyens d'inspection visuelle ou des caméras (2) et des seconds moyens d'inspection visuelle ou des caméras (3) qui vérifient des sacs (1), des moyens de transport (4) destinés à transporter des sacs (1) vers les premiers moyens d'inspection visuelle ou les caméras (2), **caractérisée en ce que** :
- les premiers moyens d'inspection visuelle ou les caméras (2) agissent sur chaque sac (1) en analysant un gabarit d'une forme prédéterminée, en acceptant ou en rejetant des sacs (1) et
- les seconds moyens d'inspection visuelle ou les caméras (3) analysent les sacs acceptés par les premiers moyens d'inspection visuelle ou les caméras (2), lesdits sacs étant sur le second moyen de transport de sacs (18),
agissant sur les premiers moyens d'inspection visuelle ou les caméras (2) indépendamment des seconds moyens d'inspection visuelle ou des caméras (3), et en outre lesdits moyens de transport (4) comprenant les premières bandes roulantes (5), au moins deux, en regard l'une de l'autre et séparées d'une distance prédéterminée, où les sacs (1) à analyser sont placés, et de sorte que dans les premières bandes roulantes (5) se trouvent des moyens de passage (12), un premier et un second, qui calculent le temps que prend un sac (1) pour passer entre le premier moyen de passage et le second, augmentant la distance entre les premières bandes roulantes (5) lorsque le moyen de passage (12) détecte que le temps pour passer entre le premier moyen de passage et le second est supérieur au temps prédéterminé.

6. Machine, selon la revendication 5, **caractérisée en ce qu'**elle comprend des moyens de retournement de sacs (21) destinés aux sacs (1) qui sont acceptés par les seconds moyens d'inspection visuelle ou les caméras (3).

7. Machine, selon la revendication 5, **caractérisée en ce qu'**elle comprend des secondes bandes roulantes (18), au moins deux, en regard l'une de l'autre et séparées d'une distance prédéterminée, où les sacs (1) acceptés par les premières bandes roulantes (5) sont placés.

8. Machine, selon la revendication 7, **caractérisée en ce que**, entre les premières bandes roulantes (5) et les secondes bandes roulantes (18) est compris un deuxième discriminateur (19) qui détourne les sacs (1) qui sortent des premières bandes roulantes (5), soit vers les secondes bandes roulantes (18), soit vers un premier conteneur (20).

9. Machine, selon la revendication 7, **caractérisée en ce que** les seconds moyens d'inspection visuelle (3) sont situés au-dessus des secondes bandes roulantes (18).

10. Machine, selon la revendication 9, **caractérisée en ce qu'**elle comprend des seconds moyens de contrôle de passage (10) pour les sacs (1) sur les secondes bandes roulantes (18), qui lorsqu'ils détectent le sac envoient des instructions aux seconds moyens d'inspection visuelle (3) de sorte qu'à cet instant ou plus tard ils capturent une image de l'anse (11) du sac.

11. Machine, selon la revendication 10, **caractérisée en ce qu'**elle comprend un troisième discriminateur (22) qui envoie les sacs acceptés (1) en vue de l'emballage et envoie les sacs rejetés (1) vers un deuxième conteneur (23).

12. Machine selon la revendication 11, **caractérisée en ce qu'**elle comprend en outre un tambour rotatif (6), activé par des moyens d'entraînement et des moyens de retenue (13) pour des sacs (1), et un premier discriminateur (7), automatique ou manuel, qui détourne les sacs (1) soit vers un troisième conteneur (15), soit vers les premières bandes roulantes (5).

13. Machine, selon la revendication 12, **caractérisée en ce que** le premier discriminateur (7), tel une porte, pivote définissant une entrée pour les sacs soit vers ledit troisième conteneur (15), soit vers les premières bandes roulantes (5).

14. Machine, selon la revendication 13, **caractérisée en ce que** le tambour rotatif (6) comprend en outre au moins deux cames, une première (17) et une seconde (24), où en fonction de la position de travail du premier discriminateur (7), les moyens de retenue (13) relâchent le sac (1) sur la première came (17) suivant le sac (1) vers les premières bandes roulantes (5) ou relâchant le sac sur la seconde came (24) vers le troisième conteneur (15).
